# EUROPEAN PATENT APPLICATION

(11) **EP 4 617 803 A1**
(43) Date of publication of application: **17.09.2025**
(21) Application number: 25160890.7
(22) Date of filing: 28.02.2025
(51) Int. Cl.: G05B 19/05, G05B 19/418, G06F 8/61, G06F 40/20, G06F 40/30, G06F 40/40, H04L 41/16, G05B 19/042

(54) **SYSTEMS AND METHODS FOR LARGE LANGUAGE MODEL (LLM) GENERATED SECURITY CONFIGURATION BASED ON SYSTEM CHARACTERISTICS**

(30) Priority: 13.03.2024 US 202418603444
(71) Applicant: Rockwell Automation Technologies, Inc., Mayfield Heights, OH 44124 (US)
(72) Inventor: Visoky, Jack M., Mayfield Heights, OH, 44124 (US); Golden, Diane E., Mayfield Heights, OH, 44124 (US); Spaner, Michael A., Mayfield Heights, OH, 44124 (US)
(74) Representative: Grünecker Patent- und Rechtsanwälte PartG mbB

(57) **Abstract**

A method includes transmitting, from a computing device, a request to generate a configuration file for an industrial automation device disposed within an industrial automation system configured to perform an industrial automation process, wherein the industrial automation device is communicatively coupled to an operational technology (OT) network, transmitting, from the computing device, one or more characteristics of the industrial automation device, the industrial automation system, the industrial automation process, the OT network, or any combination thereof, receiving, at the computing device, the configuration file for the industrial automation device, wherein the configuration file for the industrial automation device was generated using one or more large language models (LLMs) based on the one or more characteristics of the industrial automation device, the industrial automation system, the industrial automation process, the OT network, or any combination thereof, and installing the configuration file on the industrial automation device.

## Description

### BACKGROUND

The present disclosure generally relates to security for industrial automation systems and operational technology (OT) networks.

Configuring an OT network and/or industrial automation systems for security may be time consuming, resource intensive, and subject to human error. Further, the constantly changing nature of OT network security makes it difficult for lay people to stay informed of the state of the art and/or industry best practices. An operator of an OT network may wish to achieve the most secure OT network possible, given available time and resources. However, he or she may not be knowledgeable of OT network security and may not wish to hire an OT network security expert. Further, even for OT security experts, configuring an OT network to be as secure as possible may be tedious and resource intensive. Accordingly, improved techniques for more efficiently securing OT networks are desired.

This section is intended to introduce the reader to aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

### BRIEF DESCRIPTION

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In an embodiment, a method includes receiving, from a computing device, a request to generate a configuration file for an industrial automation device disposed within an industrial automation system configured to perform an industrial automation process, wherein the industrial automation device is communicatively coupled to an operational technology (OT) network, receiving, from the computing device, one or more characteristics of the industrial automation device, the industrial automation system, the industrial automation process, the OT network, or any combination thereof, generating, via processing circuitry, using one or more large language models (LLMs), the configuration file for the industrial automation device based on the one or more characteristics of the industrial automation device, the industrial automation system, the industrial automation process, the OT network, or any combination thereof, and providing the configuration file for the industrial automation device to the computing device.

In another embodiment, a method includes transmitting, from a computing device, a request to generate a configuration file for an industrial automation device disposed within an industrial automation system configured to perform an industrial automation process, wherein the industrial automation device is communicatively coupled to an operational technology (OT) network, transmitting, from the computing device, one or more characteristics of the industrial automation device, the industrial automation system, the industrial automation process, the OT network, or any combination thereof, receiving, at the computing device, the configuration file for the industrial automation device, wherein the configuration file for the industrial automation device was generated using one or more large language models (LLMs) based on one or more characteristics of the industrial automation device, the industrial automation system, the industrial automation process, the OT network, or any combination thereof, and installing the configuration file on the industrial automation device.

In a further embodiment, A non-transitory computer readable medium stores instructions that, when executed by processing circuitry, cause the processing circuitry to receive, via a user interface of a computing device, an input indicative of a request for a configuration file for an industrial automation device disposed within an industrial automation system configured to perform an industrial automation process, wherein the industrial automation device is communicatively coupled to an operational technology (OT) network, provide, via the processing circuitry, the request for the configuration file for the industrial automation device to one or more large language models (LLMs), provide, via the processing circuitry, one or more characteristics of the industrial automation device, the industrial automation system, the industrial automation process, the OT network, or any combination thereof to the one or more LLMs, generate, via the processing circuitry, using the one or more LLMs, the configuration file for the industrial automation device based on the one or more characteristics of the industrial automation device, the industrial automation system, the industrial automation process, the OT network, or any combination thereof, and provide the configuration file to the industrial automation device for installation.

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

### BRIEF DESCRIPTION OF THE DRAWINGS

These and other features, aspects, and advantages of the present embodiments will become better understood when the following detailed description is read with reference to the accompanying drawings in which like characters represent like parts throughout the drawings, wherein:
FIG. 1 is a schematic view of an industrial automation system, in accordance with embodiments presented herein;
FIG. 2 is a block diagram of example components that could be used in the industrial automation system of FIG. 1, in accordance with embodiments presented herein;
FIG. 3 is a perspective view of an example of the industrial automation system of FIG. 1 controlled by an industrial control system, in accordance with an embodiment;
FIG. 4 is a block diagram of an example operational technology (OT) network, including the industrial control system of FIG. 3, that coordinates with a container orchestration system, in accordance with an embodiment;
FIG. 5 is a schematic diagram of a large language model (LLM)-based OT network security assistant for use in the OT network of FIG. 4, in accordance with an embodiment;
FIG. 6 is a schematic of an architecture for using the LLM-based OT network security assistant of FIG. 5 within an enterprise, in accordance with an embodiment; and
FIG. 7 is a flow chart of a process for operating the LLM-based OT network security assistant of FIGS. 5 and 6, in accordance with an embodiment.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and enterprise-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

Configuring an operation technology (OT) network for security may be time consuming, resource intensive, and subject to human error. Further, the constantly changing nature of OT network security makes it difficult for lay people to stay informed of the state of the art and/or industry best practices. An operator of an OT network may wish to achieve the most secure OT network possible, given available time and resources. However, he or she may not be knowledgeable of OT network security and may not wish to hire an OT network security expert. Further, even for OT security experts, configuring an OT network to be as secure as possible may be tedious and resource intensive.

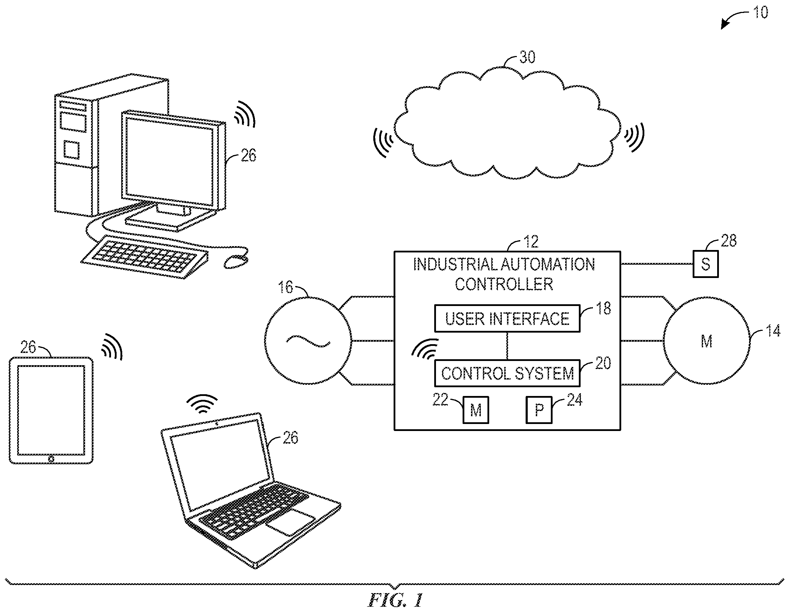

To address this, a user may access an LLM-based OT network security assistant to help secure the user's OT network. The LLM may be trained on, for example, user data, industry standards, digested OT network incident logs, user-specific policies/guidelines, time series data, log data, process data, industry knowledge, product manuals, etc. The user may provide a natural language request identifying what the user would like the OT network security assistant to do. For example, the user may request an OT network architecture, one or more configuration files, recommendations for securing the OT network, and so forth. In some cases, the user may provide supplemental data along with the natural language request. In some cases, the user may also identify its industry or product (e.g., brewery, car plant, stamping plant, etc.), geographic region, industry specifications/standards/regulations it wishes to follow, and so forth. The supplemental data may include, for example, identification of one or more assets within the OT network (e.g., a list of components, discovery data, topology data, etc.), specifics about what devices need to be able to communicate with one another, information about segmentation of the plant network, user-specific policies/guidelines, best practices, time series data, log data, etc. The LLM-based OT network security assistant may generate an output based on the natural language request and any supplemental data/files received. The output may include, for example, one or more textual configuration files that could be output to a policy manager tool or device to implement, security policies (e.g., communication policies dictating which devices are allowed to communicate with one another), recommended OT network architecture or characteristics of recommended OT network architecture (e.g., how to segment the OT network, where to put firewalls, etc.), identification or characteristics of the current or proposed OT network that violate policies/guidelines, identification or characteristics of the current or proposed OT network that violate industry standards and/or best practices, draw the user's attention to characteristics of the OT network that may not be recommended or violate internal policies/guidelines, benchmark data comparing the user to other members of the same industry, determine if an OT network is complying with security policies, prioritized suggestions for modifications to the OT network based on cost (e.g., the most impactful modifications for a given cost), an explanation of how the OT network is set up and/or why the OT network is set up the way that it is, suggestions on what patches should be installed where and how to go about installing the patches, discovered security risks within the OT network and recommend remedial actions. In some embodiments, the LLM-based OT network security assistant may have an iterative chat-style interface in which the LLM-based OT network security assistant considers inputs and asks follow-up questions seeking additional information. Further, the LLM-based OT network security assistant may apply role-based access control such that the LLM-based OT network security assistant may be aware of with whom it is interacting and what the user has the power to modify about the OT network such that the LLM-based OT network security assistant only makes suggestions to a user based on what the user has the capability to change. Additional details with regard to LLM-based security configuration will be provided below with reference to FIGS. 1-7.

By way of introduction, FIG. 1 is a schematic view of an example industrial automation system 10 in which the embodiments described herein may be implemented. As shown, the industrial automation system 10 includes a controller 12 and an actuator 14 (e.g., a motor). The industrial automation system 10 may also include, or be coupled to, a power source 16. The power source 16 may include a generator, an external power grid, a battery, or some other source of power. The controller 12 may be a stand-alone control unit that controls multiple industrial automation components (e.g., a plurality of motors 14), a controller 12 that controls the operation of a single automation component (e.g., motor 14), or a subcomponent within a larger industrial automation system 10. In the instant embodiment, the controller 12 includes a user interface 18, such as a human machine interface (HMI), and a control system 20, which may include a memory 22 and a processor 24. The controller 12 may include a cabinet or some other enclosure for housing various components of the industrial automation system 10, such as a motor starter, a disconnect switch, etc.

The control system 20 may be programmed (e.g., via computer readable code or instructions stored on the memory 22, such as a non-transitory computer readable medium, and executable by the processor 24) to provide signals for controlling the motor 14. In certain embodiments, the control system 20 may be programmed according to a specific configuration desired for a particular application. For example, the control system 20 may be programmed to respond to external inputs, such as reference signals, alarms, command/status signals, etc. The external inputs may originate from one or more relays or other electronic devices. The programming of the control system 20 may be accomplished through software or firmware code that may be loaded onto the internal memory 22 of the control system 20 (e.g., via a locally or remotely located computing device 26) or programmed via the user interface 18 of the controller 12. The control system 20 may respond to a set of operating parameters. The settings of the various operating parameters may determine the operating characteristics of the controller 12. For example, various operating parameters may determine the speed or torque of the motor 14 or may determine how the controller 12 responds to the various external inputs. As such, the operating parameters may be used to map control variables within the controller 12 or to control other devices communicatively coupled to the controller 12. These variables may include, for example, speed presets, feedback types and values, computational gains and variables, algorithm adjustments, status and feedback variables, programmable logic controller (PLC) control programming, and the like.

In some embodiments, the controller 12 may be communicatively coupled to one or more sensors 28 for detecting operating temperatures, voltages, currents, pressures, flow rates, and other measurable variables associated with the industrial automation system 10. With feedback data from the sensors 28, the control system 20 may keep detailed track of the various conditions under which the industrial automation system 10 may be operating. For example, the feedback data may include conditions such as actual motor speed, voltage, frequency, power quality, alarm conditions, etc. In some embodiments, the feedback data may be communicated back to the computing device 26 for additional analysis.

The computing device 26 may be communicatively coupled to the controller 12 via a wired or wireless connection. The computing device 26 may receive inputs from a user defining an industrial automation project using a native application running on the computing device 26 or using a website accessible via a browser application, a software application, or the like. The user may define the industrial automation project by writing code, interacting with a visual programming interface, inputting or selecting values via a graphical user interface, or providing some other inputs. The user may use licensed software and/or subscription services to create, analyze, and otherwise develop the project. The computing device 26 may send a project to the controller 12 for execution. Execution of the industrial automation project causes the controller 12 to control components (e.g., motor 14) within the industrial automation system 10 through performance of one or more tasks and/or processes. In some applications, the controller 12 may be communicatively positioned in a private network and/or behind a firewall, such that the controller 12 does not have communication access outside a local network and is not in communication with any devices outside the firewall, other than the computing device 26. The controller 12 may collect feedback data during execution of the project, and the feedback data may be provided back to the computing device 26 for analysis. Feedback data may include, for example, one or more execution times, one or more alerts, one or more error messages, one or more alarm conditions, one or more temperatures, one or more pressures, one or more flow rates, one or more motor speeds, one or more voltages, one or more frequencies, and so forth. The project may be updated via the computing device 26 based on the analysis of the feedback data.

The computing device 26 may be communicatively coupled to a cloud server 30 or remote server via the internet, or some other network. In one embodiment, the cloud server 30 may be operated by the manufacturer of the controller 12, a software provider, a seller of the controller 12, a service provider, operator of the controller 12, owner of the controller 12, etc. The cloud server 30 may be used to help users create and/or modify projects, to help troubleshoot any problems that may arise with the controller 12, develop policies, or to provide other services (e.g., project analysis, enabling, restricting capabilities of the controller 12, data analysis, controller firmware updates, etc.). The remote/cloud server 30 may be one or more servers operated by the manufacturer, software provider, seller, service provider, operator, or owner of the controller 12. The remote/cloud server 30 may be disposed at a facility owned and/or operated by the manufacturer, software provider, seller, service provider, operator, or owner of the controller 12. In other embodiments, the remote/cloud server 30 may be disposed in a datacenter in which the manufacturer, software provider, seller, service provider, operator, or owner of the controller 12 owns or rents server space. In further embodiments, the remote/cloud server 30 may include multiple servers operating in one or more data center to provide a cloud computing environment.

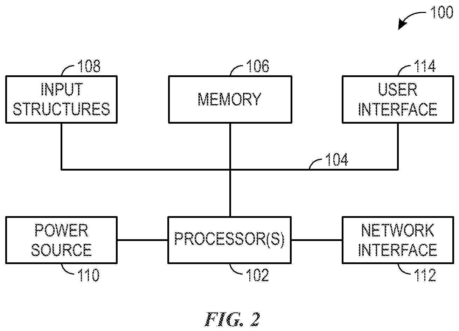

FIG. 2 illustrates a block diagram of example components of a computing device 100 that could be used as the computing device 26, the cloud/remote server 30, the controller 12, or some other device within the system 10 shown in FIG. 1. As used herein, a computing device 100 may be implemented as one or more computing systems including laptop, notebook, desktop, tablet, HMI, or workstation computers, as well as server type devices or portable, communication type devices, such as cellular telephones and/or other suitable computing devices.

As illustrated, the computing device 100 may include various hardware components, such as one or more processors 102, one or more busses 104, memory 106, input structures 108, a power source 110, a network interface 112, a user interface 114, and/or other computer components useful in performing the functions described herein.

The one or more processors 102 may include, in certain implementations, microprocessors configured to execute instructions stored in the memory 106 or other accessible locations. Alternatively, the one or more processors 102 may be implemented as application-specific integrated circuits (ASICs), field-programmable gate arrays (FPGAs), and/or other devices designed to perform functions discussed herein in a dedicated manner. As will be appreciated, multiple processors 102 or processing components may be used to perform functions discussed herein in a distributed or parallel manner.

The memory 106 may encompass any tangible, non-transitory medium for storing data or executable routines. Although shown for convenience as a single block in FIG. 2, the memory 106 may encompass various discrete media in the same or different physical locations. The one or more processors 102 may access data in the memory 106 via one or more busses 104.

The input structures 108 may allow a user to input data and/or commands to the device 100 and may include mice, touchpads, touchscreens, keyboards, controllers, and so forth. The power source 110 can be any suitable source for providing power to the various components of the computing device 100, including line and battery power. In the depicted example, the device 100 includes a network interface 112. Such a network interface 112 may allow communication with other devices on a network using one or more communication protocols. In the depicted example, the device 100 includes a user interface 114, such as a display that may display images or data provided by the one or more processors 102. The user interface 114 may include, for example, a monitor, a display, and so forth. As will be appreciated, in a real-world context a processor-based system, such as the computing device 100 of FIG. 2, may be employed to implement some or all of the present approach, such as performing the functions of the controller, the computing device 26, and/or the cloud/remote server 30 shown in FIG. 1, as well as other memory-containing devices.

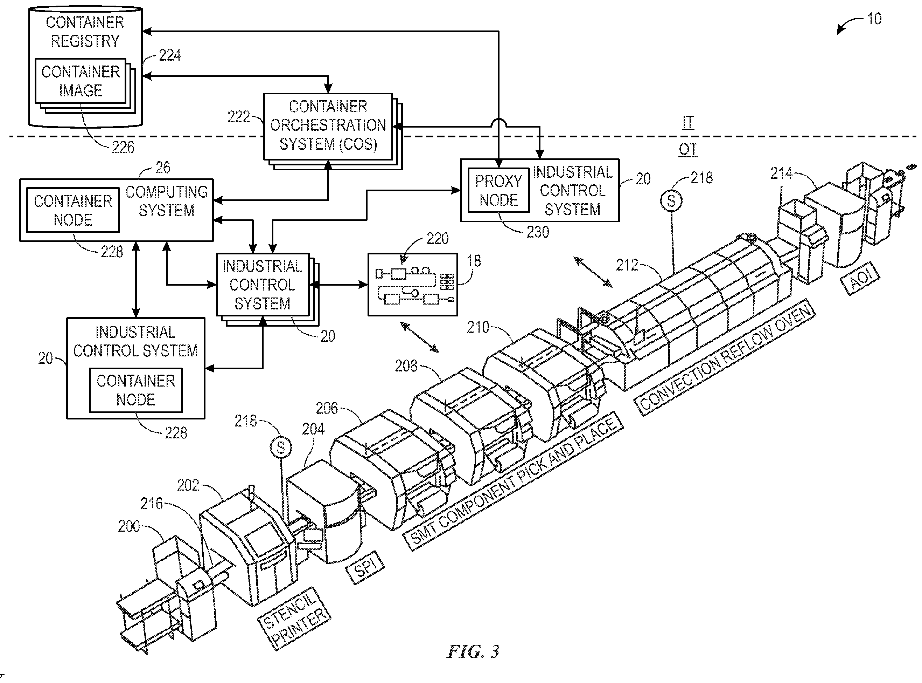

FIG. 3 is a perspective view of an example of the industrial automation system 10 of FIG. 1. The industrial automation system 10 includes stations 200, 202, 204, 206, 208, 210, 212, 214 having machine components and/or machines to conduct functions within an automated process, such as printed circuit board assembly, as is depicted. The automated process may begin at a station 200 used for loading objects, such as substrates, into the industrial automation system 10 via a conveyor section 216. For example, objects may be transported along the conveyor section 216 to station 202 to perform a first action, such a printing solder paste to the substrate via stenciling. As objects exit from the station 202, the objects may be transported via the conveyor section 216 to a station 204 for solder paste inspection (SPI) to inspect printer results, to a station 206, 208, and 210 for surface mount technology (SMT) component placement, to a station 212 for convection reflow oven to melt the solder to make electrical couplings, and finally to a station 214 for automated optical inspection (AOI) to inspect the object manufactured (e.g., the manufactured printed circuit board). After the objects proceed through the various stations, the objects may be removed from the station 214, for example, for storage in a warehouse or for shipment. It should be understood, however, that, for other applications, the particular system, machine components, machines, stations, and/or conveyors may be different or specially adapted to the application.

For example, the industrial automation system 10 may include machinery to perform various operations in a compressor station, an oil refinery, a batch operation for making food items, chemical processing operations, brewery operations, mining operations, a mechanized assembly line, and so forth. Accordingly, the industrial automation system 10 may include a variety of operational components, such as electric motors, valves, actuators, temperature elements, pressure sensors, or a myriad of machinery or devices used for manufacturing, processing, material handling, and other applications. The industrial automation system 10 may also include electrical equipment, hydraulic equipment, compressed air equipment, steam equipment, mechanical tools, protective equipment, refrigeration equipment, power lines, hydraulic lines, steam lines, and the like. Some example types of equipment may include mixers, machine conveyors, tanks, skids, specialized original equipment manufacturer machines, and the like. In addition to the equipment described above, the industrial automation system 10 may also include motors, protection devices, switchgear, compressors, and the like. Each of these described operational components may correspond to and/or generate a variety of OT data regarding operation, status, sensor data, operational modes, alarm conditions, or the like, that may be desirable to output for analysis with IT data from an IT network, for storage in an IT network, for analysis with expected operation set points (e.g., thresholds), or the like.

In certain embodiments, one or more properties of the industrial automation system 10 equipment, such as the stations 200, 202, 204, 206, 208, 210, 212, 214, may be monitored and controlled by the industrial control systems 20 for regulating control variables. For example, sensing devices (e.g., sensors 218) may monitor various properties of the industrial automation system 10 and may be used by the industrial control systems 20 at least in part in adjusting operations of the industrial automation system 10 (e.g., as part of a control loop). In some cases, the industrial automation system 10 may be associated with devices used by other equipment. For instance, scanners, gauges, valves, flow meters, and the like may be disposed on or within the industrial automation system 10. Here, the industrial control systems 20 may receive data from the associated devices and use the data to perform their respective operations more efficiently. For example, a controller of the industrial automation system 10 associated with a motor drive may receive data regarding a temperature of a connected motor and may adjust operations of the motor drive based on the data.

The industrial control systems 20 may include or be communicatively coupled to the display/operator interface 18 (e.g., a human-machine interface (HMI)) and to devices of the industrial automation system 10. It should be understood that any suitable number of industrial control systems 20 may be used in a particular industrial automation system 10 embodiment. The industrial control systems 20 may facilitate representing components of the industrial automation system 10 through programming objects that may be instantiated and executed to provide simulated functionality similar or identical to the actual components, as well as visualization of the components, or both, on the display/operator interface 18. The programming objects may include code and/or instructions stored in the industrial control systems 20 and executed by processing circuitry of the industrial control systems 20. The processing circuitry may communicate with memory circuitry to permit the storage of the component visualizations.

As illustrated, a display/operator interface 18 may be configured to depict representations 220 of the components of the industrial automation system 10. The industrial control system 20 may use data transmitted by the sensors 218 to update visualizations of the components via changing one or more statuses, states, and/or indications of current operations of the components. These sensors 218 may be any suitable device adapted to provide information regarding process conditions. Indeed, the sensors 218 may be used in a process loop (e.g., control loop) that may be monitored and controlled by the industrial control system 20. As such, a process loop may be activated based on process inputs (e.g., an input from the sensor 218) or direct input from a person via the display/operator interface 18. The person operating and/or monitoring the industrial automation system 10 may reference the display/operator interface 18 to determine various statuses, states, and/or current operations of the industrial automation system 10 and/or for a particular component. Furthermore, the person operating and/or monitoring the industrial automation system 10 may adjust to various components to start, stop, power-down, power-on, or otherwise adjust an operation of one or more components of the industrial automation system 10 through interactions with control panels or various input devices.

The industrial automation system 10 may be considered a data-rich environment with several processes and operations that each respectively generate a variety of data. For example, the industrial automation system 10 may be associated with material data (e.g., data corresponding to substrate or raw material properties or characteristics), parametric data (e.g., data corresponding to machine and/or station performance, such as during operation of the industrial automation system 10), test results data (e.g., data corresponding to various quality control tests performed on a final or intermediate product of the industrial automation system 10), or the like, that may be organized and sorted as OT data. In addition, sensors 218 may gather OT data indicative of one or more operations of the industrial automation system 10 or the industrial control system 20. In this way, the OT data may be analog data or digital data indicative of measurements, statuses, alarms, or the like associated with operation of the industrial automation system 10 or the industrial control system 20.

The industrial control systems 12 described above may operate in an OT space in which OT data is used to monitor and control OT assets, such as the equipment illustrated in the stations 200, 202, 204, 206, 208, 210, 212, 214 of the industrial automation system 10 or other industrial equipment. The OT space, environment, or network generally includes direct monitoring and control operations that are coordinated by the industrial control system 20 and a corresponding OT asset. For example, a programmable logic controller (PLC) may operate in the OT network to control operations of an OT asset (e.g., drive, motor, and/or high-level controllers). The industrial control systems 20 may be specifically programmed or configured to communicate directly with the respective OT assets.

A container orchestration system 222, on the other hand, may operate in an information technology (IT) environment. That is, the container orchestration system 222 may include a cluster of multiple computing devices that coordinates an automatic process of managing or scheduling work of individual containers for applications within the computing devices of the cluster. In other words, the container orchestration system 222 may be used to automate various tasks at scale across multiple computing devices. By way of example, the container orchestration system 222 may automate tasks such as configuring and scheduling deployment of containers, provisioning and deploying containers, determining availability of containers, configuring applications in terms of the containers that they run in, scaling of containers to equally balance application workloads across an infrastructure, allocating resources between containers, performing load balancing, traffic routing, and service discovery of containers, performing health monitoring of containers, securing the interactions between containers, and the like. In any case, the container orchestration system 222 may use configuration files to determine a network protocol to facilitate communication between containers, a storage location to save logs, and the like. The container orchestration system 222 may also schedule deployment of containers into clusters and identify a host (e.g., node) that may be best suited for executing the container. After the host is identified, the container orchestration system 222 may manage the lifecycle of the container based on predetermined specifications.

With the foregoing in mind, it should be noted that containers refer to technology for packaging an application along with its runtime dependencies. That is, containers include applications that are decoupled from an underlying host infrastructure (e.g., operating system). By including the run time dependencies with the container, the container may perform in the same manner regardless of the host in which it is operating. In some embodiments, containers may be stored in a container registry 224 as container images 226. The container registry 224 may be any suitable data storage or database that may be accessible to the container orchestration system 222. The container image 226 may correspond to an executable software package that includes the tools and data employed to execute a respective application. That is, the container image 226 may include related code for operating the application, application libraries, system libraries, runtime tools, default values for various settings, and the like.

By way of example, an integrated development environment (IDE) tool may be employed by a user to create a deployment configuration file that specifies a desired state for the collection of nodes of the container orchestration system 222. The deployment configuration file may be stored in the container registry 224 along with the respective container images 226 associated with the deployment configuration file. The deployment configuration file may include a list of different pods and a number of replicas for each pod that should be operating within the container orchestration system 222 at any given time. Each pod may correspond to a logical unit of an application, which may be associated with one or more containers. The container orchestration system 222 may coordinate the distribution and execution of the pods listed in the deployment configuration file, such that the desired state is continuously met. In some embodiments, the container orchestration system 222 may include a master node that retrieves the deployment configuration files from the container registry 224, schedules the deployment of pods to the connected nodes, and ensures that the desired state specified in the deployment configuration file is met. For instance, if a pod stops operating on one node, the master node may receive a notification from the respective worker node that is no longer executing the pod and deploy the pod to another worker node to ensure that the desired state is present across the cluster of nodes.

As mentioned above, the container orchestration system 222 may include a cluster of computing devices, computing systems, or container nodes that may work together to achieve certain specifications or states, as designated in the respective container. In some embodiments, container nodes 228 may be integrated within industrial control systems 20 as shown in FIG. 3. That is, container nodes 228 may be implemented by the industrial control systems 20, such that they appear as worker nodes to the master node in the container orchestration system 222. In this way, the master node of the container orchestration system 222 may send commands to the container nodes 228 that are also configured to perform applications and operations for the respective industrial equipment.

With this in mind, the container nodes 228 may be integrated with the industrial control systems 20, such that they serve as passive-indirect participants, passive-direct participants, or active participants of the container orchestration system 222. As passive-indirect participants, the container nodes 228 may respond to a subset of all of the commands that may be issued by the container orchestration system 222. In this way, the container nodes 228 may support limited container lifecycle features, such as receiving pods, executing the pods, updating a respective filesystem to included software packages for execution by the industrial control system 20, and reporting the status of the pods to the master node of the container orchestration system 222. The limited features implementable by the container nodes 228 that operate in the passive-indirect mode may be limited to commands that the respective industrial control system 20 may implement using native commands that map directly to the commands received by the master node of the container orchestration system 222. Moreover, the container node 228 operating in the passive-indirect mode of operation may not be capable to push the packages or directly control the operation of the industrial control system 20 to execute the package. Instead, the industrial control system 20 may periodically check the file system of the container node 228 and retrieve the new package at that time for execution.

As passive-direct participants, the container nodes 228 may operate as a node that is part of the cluster of nodes for the container orchestration system 222. As such, the container node 228 may support the full container lifecycle features. That is, container node 228 operating in the passive-direct mode may unpack a container image and push the resultant package to the industrial control system 20, such that the industrial control system 20 executes the package in response to receiving it from the container node 228. As such, the container orchestration system 222 may have access to a worker node that may directly implement commands received from the master node onto the industrial control system 20.

In the active participant mode, the container node 228 may include a computing module or system that hosts an operating system (e.g., Linux) that may continuously operate a container host daemon that may participate in the management of container operations. As such, the active participant container node 228 may perform any operations that the master node of the container orchestration system 222 may perform. By including a container node 228 operating in the OT space, the container orchestration system 222 is capable of extending its management operations into the OT space (e.g., the container node 228 may provision devices in the OT space).

A proxy node 230, which may be an instance of the container node 228 or a different container node 228, may provide bi-directional coordination between the IT space and the OT space, and the like. For instance, the container node 228 operating as the proxy node 230 may intercept orchestration commands and cause industrial control system 20 to implement appropriate machine control routines based on the commands. The industrial control system 20 may confirm the machine state to the proxy node 230, which may then reply to the master node of the container orchestration system 222 on behalf of the industrial control system 20.

Additionally, the industrial control system 20 may share an industrial automation device tree via the proxy node 230. As such, the proxy node 230 may provide the master node with state data, address data, descriptive metadata, versioning data, certificate data, key information, and other relevant parameters concerning the industrial control system 20. Moreover, the proxy node 230 may issue requests targeted to other industrial control systems 20 to control other industrial automation devices. For instance, the proxy node 230 may translate and forward commands to a target industrial automation device using one or more OT communication protocols, may translate and receive replies from the industrial automation devices, and the like. As such, the proxy node 230 may perform health checks, provide configuration updates, send firmware patches, execute certificate refreshes, and other OT operations for other industrial automation devices.

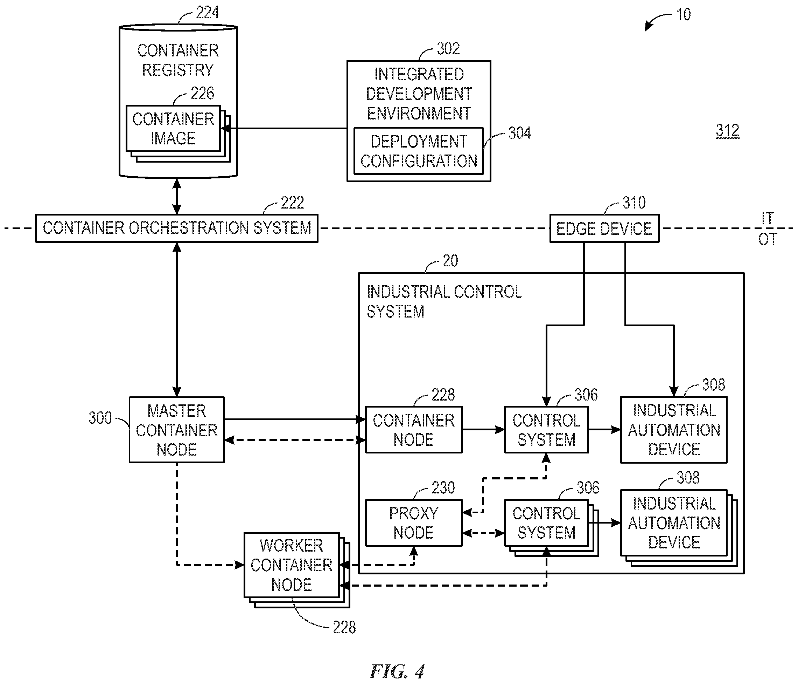

FIG. 4 illustrates a block diagram that depicts the relative positions of the container node 228 and the proxy node 230 with respect to the container orchestration system 222. As mentioned above, the container orchestration system 222 may include a collection of nodes that are used to achieve a desired state of one or more containers across multiple nodes. As shown in FIG. 4, the container orchestration system 222 may include a master node 300 that may execute control plane processes for the container orchestration system 222. The control plane processes may include the processes that enable the container orchestration system 222 to coordinate operations of the container nodes 228 to meet the desired states. As such, the master container node 300 may execute an applications programming interface (API) for the container orchestration system 222, a scheduler component, core resource controllers, and the like. By way of example, the master container node 300 may coordinate all of the interactions between nodes of the cluster that make up the container orchestration system 222. Indeed, the master container node 300 may be responsible for deciding the operations that will run on container nodes 228 including scheduling workloads (e.g., containerized applications), managing the workloads' lifecycle, scaling, and upgrades, managing network and storage resources for the workloads, and the like. The master container node 300 may run an API server to handle requests and status updates received from the container nodes 228.

By way of operation, an integrated development environment (IDE) tool 302 may be used by an operator to develop a deployment configuration file 304. As mentioned above, the deployment configuration file 304 may include details regarding the containers, the pods, constraints for operating the containers/pods, and other information that describe a desired state of the containers specified in the deployment configuration file 304. In some embodiments, the deployment configuration file 304 may be generated in a YAML file, a JSON file, or other suitable file format that is compatible with the container orchestration system 222. After the IDE tool 302 generates the deployment configuration file 304, the IDE tool 302 may transmit the deployment configuration file 304 to the container registry 224, which may store the file along with container images 226 representative of the containers stored in the deployment configuration file 304.

In some embodiments, the master container node 300 may receive the deployment configuration file 304 via the container registry 224, directly from the IDE tool 302, or the like. The master container node 300 may use the deployment configuration file 304 to determine a location to gather the container images 226, determine communication protocols to use to establish networking between container nodes 228, determine locations for mounting storage volumes, locations to store logs for the containers, and the like.

Based on the desired state provided in the deployment configuration file 304, the master container node 300 may deploy containers to the container host nodes 228. That is, the master container node 300 may schedule the deployment of a container based on constraints (e.g., CPU or memory availability) provided in the deployment configuration file 304. After the containers are operating on the container nodes 228, the master container node 300 may manage the lifecycle of the containers to ensure that the containers specified by the deployment configuration file 304 are operating according to the specified constraints and the desired state.

Keeping the foregoing in mind, the industrial control system 20 may not use an operating system (OS) that is compatible with the container orchestration system 222. That is, the container orchestration system 222 may be configured to operate in the IT space that involves the flow of digital information. In contrast, the industrial control system 20 may operate in the OT space that involves managing the operation of physical processes and the machinery used to perform those processes. For example, the OT space may involve communications that are formatted according to OT communication protocols, such as FactoryTalk LiveData, EtherNet/IP, Common Industrial Protocol (CIP), OPC Direct Access (e.g., machine to machine communication protocol for industrial automation developed by the OPC Foundation), OPC Unified Architecture (OPCUA), or any suitable OT communication protocol (e.g. DNP3, Modbus, Profibus, LonWorks, DALI, BACnet, KNX, EnOcean). Because the industrial control systems 20 operate in the OT space, the industrial control systems may not be capable of implementing commands received via the container orchestration system 222.

In certain embodiments, the container node 228 may be programmed or implemented in the industrial control system 20 to serve as a node agent that can register the industrial control system 20 with the master container node 300. The node agent may or may not be the same as the proxy node 230 shown in FIG. 3. For example, the industrial control system 20 may include a PLC that cannot support an operating system (e.g., Linux) for receiving and/or implementing requested operations issued by the container orchestration system 222. However, the PLC may perform certain operations that may be mapped to certain container events. As such, the container node 228 may include software and/or hardware components that may map certain events or commands received from the master container node 300 into actions that may be performed by the PLC. After converting the received command into a command interpretable by the PLC, the container node 228 may forward the mapped command to the PLC that may implement the mapped command. As such, the container node 228 may operate as part of the cluster of nodes that make up the container orchestration system 222, while a first control system 306 (e.g., PLC) that coordinates the OT operations for a second industrial automation device 308 in the industrial control system 12. The first control system 306 may include a controller, such as a PLC, a high-level controller (HLC), a programmable automation controller (PAC), or any other controller that may monitor, control, and operate an industrial automation device or component.

The industrial automation device 308 may correspond to an industrial automation device or component and may include any suitable industrial device that operates in the OT space. As such, the industrial automation device 308 may be involved in adjusting physical processes being implemented via the industrial system 10. In some embodiments, the industrial automation device 308 may include motors, contactors, starters, sensors, drives, relays, protection devices, switchgear, compressors. In addition, the industrial automation device 308 may also be related to various industrial equipment such as mixers, machine conveyors, tanks, skids, specialized original equipment manufacturer machines, and the like. The industrial automation device 308 may also be associated with devices used by the equipment such as scanners, gauges, valves, flow meters, and the like.

In the present embodiments described herein, the control system 306 may thus perform actions based on commands received from the container node 228. By mapping certain container lifecycle states into appropriate corresponding actions implementable by the control system 306, the container node 228 enables program content for the industrial control system 20 to be containerized, published to certain registries, and deployed using the master container node 300, thereby bridging the gap between the IT-based container orchestration system 222 and the OT-based industrial control system 20.

In some embodiments, the container node 228 may operate in an active mode, such that the container node may invoke container orchestration commands for other container nodes 228. For example, a proxy node 230 may operate as a proxy or gateway node that is part of the container orchestration system 222. The proxy node 230 may be implemented in a sidecar computing module that has an operating system (OS) that supports the container host daemon. In another embodiment, the proxy node 230 may be implemented directly on a core of the control system 306 that is configured (e.g., partitioned), such that the control system 306 may operate using an operating system that allows the container node 228 to execute orchestration commands and serve as part of the container orchestration system 222. In either case, the proxy node 230 may serve as a bi-directional bridge for IT/OT orchestration that enables automation functions to be performed in IT devices based on OT data and in industrial automation control systems 306 and industrial automation devices 308 based on IT data. For instance, the proxy node 230 may acquire industrial automation device tree data, state data for an industrial automation device, descriptive metadata associated with corresponding OT data, versioning data for industrial automation control systems 306 and industrial automation devices 308, certificate/key data for the industrial automation device, and other relevant OT data via OT communication protocols. The proxy node 230 may then translate the OT data into IT data that may be formatted to enable the master container node 300 to extract relevant data (e.g., machine state data) to perform analysis operations and to ensure that the container orchestration system 222 and the connected control systems 306 are operating at the desired state. Based on the results of its scheduling operations, the master container node 300 may issue supervisory control commands to targeted industrial automation device via the proxy nodes 230, which may translate and forward the translated commands to the respective control system 306 via the appropriate OT communication protocol.

In addition, the proxy node 230 may also perform certain supervisory operations based on its analysis of the machine state data of the respective control system 306. As a result of its analysis, the proxy node 230 may issue commands and/or pods to other nodes that are part of the container orchestration system 222. For example, the proxy node 230 may send instructions or pods to other worker container nodes 228 that may be part of the container orchestration system 222. The worker container nodes 228 may corresponds to other container nodes 228 that are communicatively coupled to other control systems 306 for controlling other industrial automation devices 308. In this way, the proxy node 230 may translate or forward commands directly to other control systems 306 via certain OT communication protocols or indirectly via the other worker container nodes 228 associated with the other control systems 306. In addition, the proxy node 230 may receive replies from the control systems 306 via the OT communication protocol and translate the replies, such that the nodes in the container orchestration system 222 may interpret the replies. In this way, the container orchestration system 222 may effectively perform health checks, send configuration updates, provide firmware patches, execute certificate refreshes, and provide other services to industrial automation devices 308 in a coordinated fashion. That is, the proxy node 230 may enable the container orchestration system to coordinate the activities of multiple control systems 306 to achieve a collection of desired machine states for the connected industrial automation devices 308.

As shown in FIG. 4, the industrial automation system 10 may include one or more edge devices 310 that interact with OT assets 306, 308 within the industrial automation system 10. As used herein, an "edge device" 310 is a device within the industrial automation system 10 that controls data flow within the industrial automation system 10 (e.g., the OT network) as well as between the industrial automation system 10 (e.g., the OT network) and an IT network 312. For example, the edge device 310 may be a router, a switch, or the like. In certain embodiments, the edge device 310 may receive data from the network 312 that may include, for example, an enterprise system, a server device, a plant management system, or the like. The enterprise system may include software and/or hardware components that support business processes, information flows, reporting, data analytics, and the like for an enterprise. The server device may manage communication between the components of the industrial automation system 10. The plant management system may include any suitable management computing system that receives data from a number of control systems (e.g., industrial control systems 20). As such, the plant management system may track operations of one or more facilities and one or more locations. In addition, the plant management system may issue control commands to the components of the industrial automation system 10.

Configuring the industrial automation system 10 and the OT network associated with the industrial automation system 10 for security may be time consuming, resource intensive, and subject to human error. Moreover, the constantly changing nature of network security for industrial automation systems 10 makes it difficult for lay people to stay informed of the state of the art and/or industry best practices. For example, an operator of an OT network may wish to achieve the most secure OT network possible, given available time and resources. However, he or she may not be knowledgeable of OT network security and may not wish to hire an OT network security expert. Further, even for OT security experts, configuring an OT network to be as secure as possible may be tedious and resource intensive. Accordingly, an LLM-based OT network security assistant may be utilized to help secure OT networks. Specifically, the LLM-based OT network security assistant may be configured to generate configuration files ("config" files) that can be used to configure industrial automation devices and OT network devices, policies (e.g., security policies), network architecture recommendations, alerts regarding the security of an industrial automation system and/or an OT network, determine the compliance status of an industrial automation system and/or an OT network as related to one or more policies, recommendations to improve security of an industrial automation system and/or an OT network, and so forth. As will be described in more detail below, the LLM-based OT network security assistant may run on a compute surface (e.g., in a container) within the OT network, on an edge device, on an on-prem server, on a remote/cloud server, which may be operated by the enterprise or a service provider, a workstation computer, a laptop computer, a tablet, a smartphone or other mobile device, and so forth.

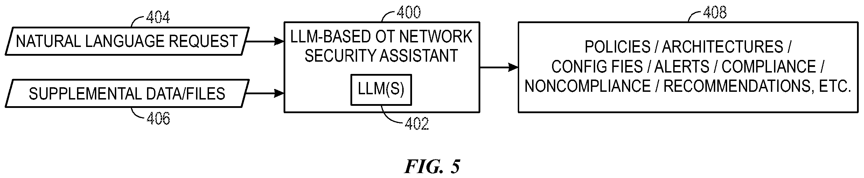

FIG. 5 is a schematic diagram of the LLM-based OT network security assistant 400. As shown, the LLM-based OT network security assistant 400 may include or rely on one or more LLMs 402. The one or more LLMs 402 may be trained on user data, digested OT network security logs, user-specific policies, user-specific guidelines, time series data, log data, process data, industry standards, industry knowledge, product manuals, publications, publicly available security threat intel, and so forth. Specifically, the user data may include architectures of user industrial automation systems and/or OT networks, security policies used by users, vulnerabilities experienced by users, and so forth.

In some embodiments, the one or more LLMs 402 may be trained by a service provider that provides OT network security services to multiple users, collects data from those users in the provision of the OT network security services, and trains the one or more LLMs 402 based on the collected data. However, in other embodiments, the one or more LLMs 402 may be trained and operated by the enterprise that operates the industrial automation system and/or the OT network. In such embodiments, the operator of the one or more LLMs 402 may utilize externally available data (e.g., publicly available data or data accessible via a data subscription service) to diversify training data for the one or more LLMs 402.

In some embodiments, the LLM-based OT network security assistant 400 may run on premises ("on-prem") in the same facility as the industrial automation system. In such embodiments, the LLM-based OT network security assistant 400 may run on an on-prem server, on a computing device (e.g., a workstation computer, a laptop computer, a tablet, a mobile device, a human-machine interface (HMI)), edge devices, or on a compute surface within the IT or OT network. In such an embodiment, the compute surface may be available on any device having a processor and a memory with excess processing and/or memory capabilities to run the LLM-based OT network security assistant 400. Accordingly, compute surfaces may be available on controllers, drives, IoT devices, or other devices within the industrial automation system and OT network. In some embodiments, the LLM-based OT network security assistant 400 may run in a container (e.g., as a containerized application) on a compute surface within the OT network or IT network.

In other embodiments, the LLM-based OT network security assistant 400 may run on a cloud or remote server that may be accessible via one or more computing device within the IT or OT networks. In further embodiments, the LLM-based OT network security assistant 400 may include one or more on-prem instantiations and one or more remote/cloud instantiations that may be capable of communicating with one another.

The LLM-based OT network security assistant 400 may run as a native application or be accessible via a web browser of a computing device. As shown, a natural language request 404 may be provided to the LLM-based OT network security assistant 400 requesting an output. For example, the natural language request 404 may include one or more human-readable alphanumeric character strings asking the LLM-based OT network security assistant 400 to perform some task. For example, the input may include a request to generate an OT network architecture, one or more configuration files (e.g., a file to configure and Intrusion Detection System (IDS), a file to configure a Firewall, a file to configure a system security tool that sets up communication security with certificates, a file to configure an Identity and Access Management System, etc.), recommendations for securing the OT network, requests to prioritize security hardening activities (e.g., patching), identification of high risk security configurations within the system, and so forth. In some embodiments, the natural language request 404 may be accompanied by one or more pieces of supplemental data or files. These may include, for example, identification of one or more assets within the OT network (e.g., a list of components, discovery data, topology data, etc.), system/network architecture, information about segmentation of the plant network, information about what devices need to be able to communicate with one another, user-specific policies/guidelines, best practices, component lists, maintenance logs, service records, software/firmware versions, time series data, log data, packet captures, security policy configurations, firewall rules, etc. The supplemental data may also include information about the user's industry, the product being produced or process being performed (e.g., brewery, car plant, stamping plant, etc.), geographic region or country, industry specifications/standards/regulations the user wishes to follow, and so forth.

Based on the natural language request 404 and the supplemental data/files 406, if any, the LLM-based OT network security assistant 400 may utilize the one or more LLM(s) 402 generate an output 408 in response to the request. The output may vary based on the request and the application.

In an embodiment, the natural language request 404 may be a request for config files, which may include text filed that can be used to configure one or more devices on the OT network by setting various operational parameters for the devices upon installation and/or execution. For example, the config file may be provided to the device to be configured for execution. In other embodiments, the config file may be provided to another device, communicatively coupled to the device to be configured, which configures the device using the config file. The supplemental data/files 406 may include an OT network topology, a component list, an industry, a process being performed or product being made, specifications/standards/regulations to follow, region/country, existing and/or target production quantity, existing or target operational parameters, goals, etc., or some combination thereof. In response, the LLM-based OT network security assistant 400 may generate as the output 408 one or more config files for configuring devices in the OT network. As previously described, the config files may be provided to the devices to be configured for execution or provided to other related devices, communicatively coupled to the devices to be configured, which configure the devices using the config files.

In another embodiment, the natural language request 404 may be a request for security policies to be implemented in an OT network. In such an example, the supplemental data/files 406 may include an OT network topology, a component list, an industry, a process being performed or product being made, specifications/standards/regulations to follow, region/country, target production quantity, target operational parameters, goals, etc., or some combination thereof. In response, the LLM-based OT network security assistant 400 may generate one or more security policies to be deployed within the OT network based on the natural language request 404 and/or the supplemental data/files 406. In some embodiments, the policies may be displayed via a GUI, which may provide a user with the option to select policies to implement.

A policy is a set of one or more rules or procedures that govern access and use of an organization's OT assets (e.g., industrial automation devices associated with OT machines). Characteristics of policies may include confidentiality, availability, integrity, authentication, operation, and non-repudiation of the organization's OT assets. A policy may include a set of two or more settings that identify data or information for components of the industrial automation system, or endpoints thereof, that are to be trusted, information regarding which communication ports to use, and the like. As such, a policy sets forth provisions that may govern management of OT assets, access to such assets, backups of such assets, security of such assets, operation of such assets, management of data used and/or generated by such assets, and the like. For example, a policy may define provisions addressing acceptable usage of OT/IT assets, antivirus management, data backup and disaster recovery, change management, cryptography usage, data and asset classification, data retention, data support and operations, data usage, email/messaging protection policies, user identity and access management, incident response, threat protection, internet usage restrictions, mobile device policy, OT/IT network security, password and credential protocols, firmware/patch management, personnel security, physical and environmental security, malware/spyware/ransomware detection, system update schedules, wireless network access, guest access, and so forth. Accordingly, a policy may govern, for example, how to manage who has access to what OT devices, what files and/or communications should be encrypted, protocol usage for certain communications, which devices within the OT network are allowed to communicate with one another, what ports can be used for what purposes, characteristics of passwords (e.g., number of characters, upper and lower case letters, numbers, special characters), how often users must change their passwords, how often backups are done, how long backups are retained, guidelines for accessing wireless internet, what happens when a threat occurs, processes for onboarding/offboarding users as they start and leave positions, the process that occurs when a user changes roles, maintenance procedures, and so forth.

In one embodiment, the natural language request 404 may be a request for a recommended network architecture or characteristics of a recommended network architecture. The supplemental data/files 406 may include an OT network topology, a component list, an industry, a process being performed or product being made, specifications/standards/regulations to follow, region/country, target production quantity, target operational parameters, goals, etc., or some combination thereof. In response, the LLM-based OT network security assistant 400 may generate as the output 408 a proposed network architecture or one or more characteristics of a proposed network architecture based on the natural language request 404 and/or the supplemental data/files 406. For example, the output may include a diagram of the proposed network topology, suggestions about how to segment the OT network, where to place firewalls, suggested firewall rules based on proposed topology, where to place edge devices, Intrusion Detection Systems (IDSs), and Intrusion Protection Systems (IPSs), etc. In some embodiments, the recommended network architecture or characteristics of a recommended network architecture may be displayed via a GUI, which may provide a user with the option to select recommended network architecture or characteristics of a recommended network architecture to implement.

In another embodiment, the natural language request 404 may be a request to identify one or more characteristics of a current or proposed OT network that violate one or more policies or guidelines or provide a validation report that the current or proposed OT network meets the policies or guidelines. The supplemental data/files 406 may include the current or proposed OT network topology, a component list, as well as one or more policies, specifications, standards, regulations, etc. to follow, or some combination thereof. In response, the LLM-based OT network security assistant 400 may generate an output 408 identifying one or more characteristics of the current or proposed OT network that violate the one or more policies or guidelines. In some embodiments, the output 408 may also include recommendations for modifications to the OT network to bring the OT network into compliance with the one or more policies or guidelines. The one or more characteristics of a current or proposed OT network that violate one or more policies or guidelines and/or the modifications for addressing the one or more characteristics may be displayed via a GUI, which may provide a user with the option to select modifications to implement.

In other embodiments, the natural language request 404 may be a request to identify one or more characteristics of a current or proposed OT network that do not comply with one or more industry standards and/or best practices. In such an embodiment, the supplemental data/files 406 may include the current or proposed OT network topology, a component list, as well as one or more industry standards and/or best practices, etc. to follow, or some combination thereof. In response, the LLM-based OT network security assistant 400 may generate an output 408 identifying one or more characteristics of the current or proposed OT network that do not comply with one or more of the identified industry standards and/or best practices. In some embodiments, the output 408 may also include recommendations for modifications to the OT network to bring the OT network into compliance with the one or more industry standards and/or best practices. In some embodiments, the one or more characteristics of a current or proposed OT network that do not comply with one or more industry standards and/or best practices and/or the modifications for addressing the one or more characteristics may be displayed via a GUI, which may provide a user with the option to select modifications to implement.

In further embodiments, the natural language request 404 may be a request to identify one or more characteristics of a current or proposed OT network that are not recommended or otherwise do not comply with one or more internal policies, guidelines, design objectives, etc. In such an embodiment, the supplemental data/files 406 may include the current or proposed OT network topology, a component list, as well as one or more internal policies, guidelines, design objectives, etc., or some combination thereof. In response, the LLM-based OT network security assistant 400 may generate an output 408 identifying one or more characteristics of the current or proposed OT network that do not comply with one or more of the internal policies, guidelines, design objectives, etc. In some embodiments, the output 408 may also include recommendations for modifications to the OT network to bring the OT network into compliance with the one or more internal policies, guidelines, design objectives, etc. In some embodiments, the one or more characteristics of a current or proposed OT network that are not recommended or otherwise do not comply with one or more internal policies, guidelines, design objectives, etc. and/or the modifications for addressing the one or more characteristics may be displayed via a GUI, which may provide a user with the option to select modifications to implement.

In another embodiment, the natural language request 404 may be a request for benchmark data for comparing the user to one or more competitors or other members of the same industry, other entities performing the same or similar processes, similar entities in the same geographical region or jurisdiction, and so forth. The supplemental data/files 406 may include an OT network topology, a component list, an industry, a process being performed or product being made, specifications/standards/regulations to follow, region/country, existing and/or target production quantity, existing or target operational parameters, goals, etc., or some combination thereof. In response, the LLM-based OT network security assistant 400 may generate as the output 408 benchmark data for comparing the user to one or more competitors or other members of the same industry, other entities performing the same or similar processes, similar entities in the same geographical region or jurisdiction, and so forth. In some embodiments, the output may include a comparison of the user to the one or more competitors or other members of the same industry, other entities performing the same or similar processes, similar entities in the same geographical region or jurisdiction, etc. In such embodiments, the comparison may be displayed via a GUI and include charts, graphs, plots, key performance indicators (KPIs), metrics, and/or other visual representations of the user to the one or more competitors or other members of the same industry, other entities performing the same or similar processes, similar entities in the same geographical region or jurisdiction, etc.

In further embodiments, the natural language request 404 may be a request to determine whether the OT network is in compliance with one or more security policies. In such an embodiment, the supplemental data/files 406 may include the current or proposed OT network topology, a component list, as well as identification of one or more security policies, or some combination thereof. In response, the LLM-based OT network security assistant 400 may generate an output 408 identifying whether the OT network is in compliance with one or more security policies. If the OT network is not in compliance with the one or more security policies, the output may identify one or more characteristics of the OT network that are not in compliance with the security policies and/or recommendations for modifications to the OT network to bring the OT network into compliance with the security policies. In some embodiments, the identification of whether the OT network is in compliance with one or more security policies may be displayed via a GUI, which may provide a user with the option to select modifications to implement.

In other embodiments, the natural language request 404 may be a request for prioritized suggestions for modifying the OT network to improve the security of the OT network given cost constraints. The supplemental data/files 406 may include an OT network topology, a component list, an industry, a process being performed or product being made, specifications/standards/regulations to follow, region/country, existing and/or target production quantity, existing or target operational parameters, other data collected from the industrial automation system, goals, cost constraints, etc., or some combination thereof. The output may include one or more suggestions for modifying the OT network to improve the security of the OT network given cost constraints. In some embodiments, the output may be a prioritized list of suggestions for modifying the OT network to improve the security of the OT network given cost constraints, such that highest priority suggestions appear at the top of the list and subsequent suggestions are ranked based on some priority. In some embodiments, the suggestions may be presented via a GUI, which may include various parameters for filtering or reprioritizing the list of recommendations. Accordingly, inputs filtering or providing feedback to the list of recommendations may be received and the list may be updated based on the received inputs. Further, the GUI may provide a user with the option to select suggestions to implement (e.g., updating firmware, ordering a new component, using a different protocol, etc.).

In further embodiments, the natural language request 404 may be a request for an explanation as to how the OT network is set up and/or why the OT network is set up the way it is. The supplemental data/files 406 may include an OT network topology, a component list, an industry, a process being performed or product being made, specifications/standards/regulations to follow, region/country, existing and/or target production quantity, existing or target operational parameters, other data collected from the industrial automation system, goals, cost constraints, etc., or some combination thereof. In response, the LLM-based OT network security assistant 400 may generate as the output 408 the explanation as to how the OT network is set up and/or why the OT network is set up the way it is. In some embodiments, the explanation as to how the OT network is set up and/or why the OT network is set up the way it is may be presented via a GUI, which may include one or more visualizations and/or metrics.

In another embodiment, the natural language request 404 may be a request for guidance regarding what patches (e.g., a set of changes to a computer program, firmware, or supporting data to update, fix, or otherwise improve the computer program or firmware) should be installed where (e.g., on which devices) and how to go about installing the patches (e.g., an order/sequence of patch installation, specific versions of patches to install, how to access patches, etc.). The supplemental data/files 406 may include an OT network topology, a component list, an industry, a process being performed or product being made, specifications/standards/regulations to follow, region/country, existing and/or target production quantity, existing or target operational parameters, other data collected from the industrial automation system, goals, cost constraints, etc., or some combination thereof. In response, the LLM-based OT network security assistant 400 may generate as the output 408 guidance regarding what patches should be installed where and how to go about installing the patches. In some embodiments, the guidance regarding what patches should be installed where and how to go about installing the patches may be presented via a GUI, which may include one or more visualizations or other media (e.g., step-by-step instructions, a list of patches, photos and/or video with instructions for installing the patches, etc.).

In some embodiments, the natural language request 404 may be a request to identify security risks and/or vulnerabilities within the OT network. In such embodiments, the supplemental data/files 406 may include an OT network topology, a component list, an industry, a process being performed or product being made, specifications/standards/regulations to follow, region/country, existing and/or target production quantity, existing or target operational parameters, other data collected from the industrial automation system, goals, cost constraints, etc., or some combination thereof. In response, the LLM-based OT network security assistant 400 may generate as the output 408 an identification of security risks and/or vulnerabilities within the OT network. The output may also include one or more suggestions for modifying the OT network to address the identified security risks and/or vulnerabilities within the OT network. In some embodiments, the identification of security risks and/or vulnerabilities within the OT network and/or suggestions for modifying the OT network to address the identified security risks and/or vulnerabilities within the OT network may be presented via a GUI. Further, the GUI may provide a user with the option to select suggestions to implement (e.g., updating firmware, ordering a new component, using a different protocol, etc.).

Once an output 408 has been generated, additional inputs 404 may be received providing feedback on the output 408. For example, inputs may be provided requesting modifications to the output 408 (e.g., providing additional/different constraints, providing one or more filter parameters, etc.) Accordingly, interaction with the LLM-based OT network security assistant 400 may be via a chat-style interface in which a user provides inputs and the LLM-based OT network security assistant 400 provides outputs/responses and the exchanges between the user and the LLM-based OT network security assistant 400 are displayed in the same window in chronological order. In such an embodiment, additional inputs 404 may be provided in response to outputs 408 as follow-up questions and/or feedback, which may seek additional information, modifications to the output, new outputs, and so forth.

In some embodiments, the LLM-based OT network security assistant 400 may apply role-based access control such that the LLM-based OT network security assistant 400 may be aware of a user profile with which the LLM-based OT network security assistant 400 is interacting and, based on characteristics of the user profile, what privileges/authority the user profile has to modify the OT network or operations of the such that the LLM-based OT network security assistant 400 only makes suggestions that a user profile has authority to implement, and in some cases only discloses information that the user is authorized to view.

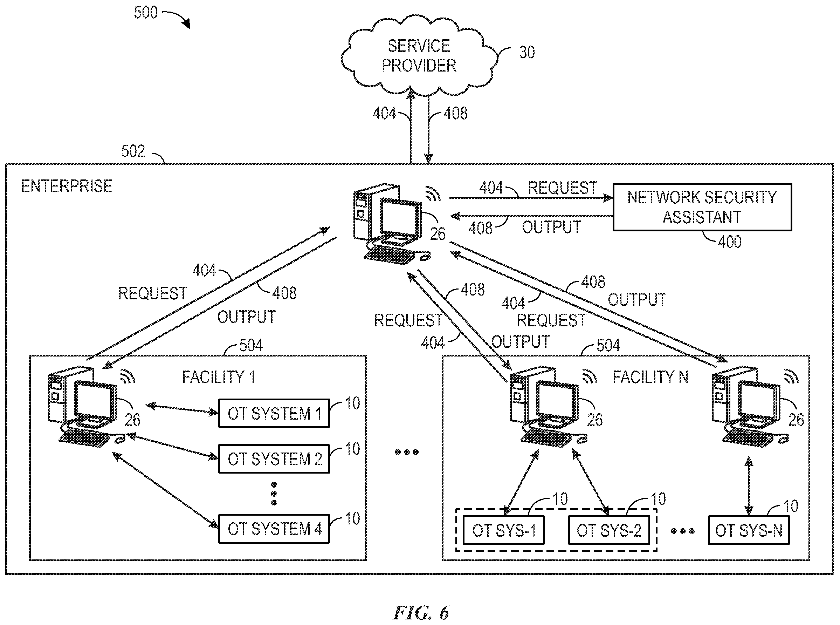

FIG. 6 illustrates a schematic of an architecture 500 for using the LLM-based OT network security assistant 400 within an enterprise 502. As shown, the enterprise 502 may operate multiple facilities 504, each having one or more industrial automation systems 10, managed by one or more computing devices 26. Operations of each facility 504 may be managed by one or more computing devices 26 that may be on premises at the facility or located remote from the facility 504. Though not shown, in some embodiments, some facilities 504 may be further subdivided into areas having one or more industrial automation systems 10 under the control of a respective management system (e.g., a computing device 26 running control software). The industrial automation systems 10 may be disposed behind firewalls and/or within private networks defined by one or more firewalls. A single private network may encompass an entire facility 504, an area of a facility 504 that includes one or more industrial automation systems 10, or individual industrial automation systems 10 within a facility 504, or spanning multiple facilities 504. One or more computing devices 26 disposed throughout the enterprise 502, may run software for managing operations of the enterprise 502.

As previously described, the LLM-based OT network security assistant 400 may be configured to receive inputs 404 and use one or more LLM(s) to generate outputs 408 in response. For example, a user may utilize the LLM-based OT network security assistant 400 to generate or modify config files, generate or modify security policies, recommend network architecture or characteristics of a recommended network architecture, identify one or more characteristics of a current or proposed OT network that violate one or more policies or guidelines, identify one or more characteristics of a current or proposed OT network that do not comply with one or more industry standards and/or best practices, identify one or more characteristics of a current or proposed OT network that are not recommended or otherwise do not comply with one or more internal policies, guidelines, design objectives, etc., provide benchmark data for comparing the user to one or more competitors or other members of the same industry, other entities performing the same or similar processes, similar entities in the same geographical region or jurisdiction, and so forth, determine whether the OT network is in compliance with one or more security policies, generate prioritized suggestions for modifying the OT network to improve the security of the OT network given cost constraints, generate an explanation as to how the OT network is set up and/or why the OT network is set up the way it is, provide guidance regarding what patches (e.g., a set of changes to a computer program, firmware, or supporting data to update, fix, or otherwise improve the computer program or firmware) should be installed where (e.g., on which devices) and how to go about installing the patches (e.g., an order/sequence of patch installation, specific versions of patches to install, how to access patches, etc.), and/or identify security risks and/or vulnerabilities within the OT network, and so forth, or any combination thereof. That is, the LLM-based OT network security assistant 400 may be utilized to modify one or more OT networks operated by the enterprise 502 to improve security. In some embodiments, changes may only be made downstream of where the LLM-based OT network security assistant 400 is instantiated or downstream of the computing device accessing the LLM-based OT network security assistant 400. For example, a user accessing the LLM-based OT network security assistant 400 from a location upstream of the enterprise's 502 facilities 504 may be able to manage policies for the entire enterprise 502, whereas a user accessing the LLM-based OT network security assistant 400 at Facility 1 may be able to make adjustments to OT networks within Facility 1, but may not be authorized to make adjustments to OT networks within Facility N. Similarly, a user accessing the LLM-based OT network security assistant 400 via Facility N may only be able to make adjustments to OT networks and/or industrial automation systems 10 that are within the facility 504 (e.g., OT SYS-1 and OT SYS-2, but not OT SYS-N). However, in other embodiments, authority to make adjustments to OT networks and/or industrial automation systems 10 within an enterprise 502 may be determined based on other factors, such as authority granted to specific users or user profiles, the type of adjustments being made, components affected by changes, etc.

In some embodiments, the LLM-based OT network security assistant 400 may be configured to collect or receive data from industrial automation systems 10 and/or OT networks operated by the enterprise and recommend modifications to the industrial automation systems 10 and/or OT networks, and/or train itself on the collected data. In some embodiments, the collected data may be discovery data and/or network topology data that may be analyzed to determine characteristics of the OT network and, in some embodiments, generate visualizations (e.g., network maps) of the OT network. Specifically, characteristic information (e.g., IP addresses, MAC addresses, serial numbers, SKUs, etc.) may be used to identify and/or characterize components that appear in data until a topology (e.g., map) of the whole OT network can be generated. In such embodiments, the data may include a manufacturer name, a product name, a model name, a model number, a serial number, a firmware version, a software version, a port status, captured network traffic, Common Industrial Protocol (CIP) discovery data, link layer discovery protocol (LLDP) data, network traffic data, Open Platform Communications Unified Architecture (OPC-UA) data, and so forth. The collected data may also include, for example, design artifacts, help ticket data, incident data, vulnerability data, network traffic data, captured network traffic (e.g., data packets), device logs, data received from one or more service providers, notes provided by an operator, software/firmware update data, warning data, error code data, operational data, temperature data, pressure data, speed/rotation data, quality control data, and so forth. Design artifacts and/or operational data may be aggregated and used to generate recommended modifications to the industrial automation systems and/or OT networks. Once modifications have been implemented, new data may be collected and used to retrain and/or refine the LLM-based OT network security assistant 400.

Though the embodiment shown in FIG. 6 uses the computing device 26 at the enterprise level to interface with or run the LLM-based OT network security assistant 400, it should be understood that embodiments are envisaged in which computing devices at the enterprise, facility, system, or device level may interface with the LLM-based OT network security assistant 400 and/or run local instantiations of the LLM-based OT network security assistant 400. That is, providing inputs to the LLM-based OT network security assistant 400 and receiving outputs from the LLM-based OT network security assistant 400 may be performed at various levels of an enterprise's 502 structure (e.g., the device level, the system level, the facility level, the enterprise level, one or more intermediate levels, or distributed among multiple levels).

In some embodiments, the LLM-based OT network security assistant 400 may be run on an edge device in an OT network. In such embodiments, the edge device may receive inputs 404 from one or more devices on an OT network, provide the inputs to the LLM-based OT network security assistant 400 running on the edge device, and receive an output from the LLM-based OT network security assistant 400, and transmit the output back to the one or more requesting devices. The LLM-based OT network security assistant 400 may run on a processor of the edge device within an operating system, or the LLM-based OT network security assistant 400 may run in a container that is managed by the container orchestration system 222 of FIGS. 3 and 4 (e.g., Docker, KUBERNETES^{®}) instead of, or in addition to, the edge device. As previously described, the container orchestration system may operate in an IT environment and may include a cluster of multiple computing devices that coordinates an automatic process of managing or scheduling work of individual containers (e.g., operating system level virtualization) for applications within the computing devices of the cluster. In other words, the container orchestration system may be used to automate various tasks at scale across multiple computing devices.

In some embodiments, the enterprise 502 may purchase or subscribe to services, such as LLMs, training data for training LLMs, and/or recommended policies, config files, etc. to the enterprise 502, provided by a service provider 30 operating a remote/cloud server. In some embodiments, the service provider may operate the LLM-based OT network security assistant 400 and provide access to the enterprise 502. Inputs may be provided to the service provider 30, which may provide the inputs to the LLM-based OT network security assistant 400 and return outputs to the enterprise 502. In such embodiments, the service provider 30 may collect data (e.g., based on the requests, the supplemental data/files, or other collected data) and use the data collected from one or more user enterprises to retrain LLMs and/or generate training data provided to the enterprises 502. In some embodiments, service providers may condition access to the LLMs on users providing data. Users may choose to opt in or opt out of providing data to the service provider 30. In some cases, because enterprises may be hesitant to share data, data may be anonymized, masked, pseudonymized, generalized, or otherwise scrubbed before being transmitted to the service provider. For example, characteristic data elements (e.g., names, addresses, IP addresses, MAC addresses, phone numbers, network names, passwords or password hashes, employee names, employee numbers, employee information, etc.) within the data may be identified and removed and/or changed before being transmitted. Further, data elements related to industrial processes, settings of the industrial automation systems, set points, trade secrets, intellectual property, or other proprietary information may be identified and removed or changed before being transmitted. Further, the service provider 30 may take additional steps to secure the data received by the enterprise 502, such as using a secure communication channel, encrypting data for transmission, encrypting data for storage, and so forth.

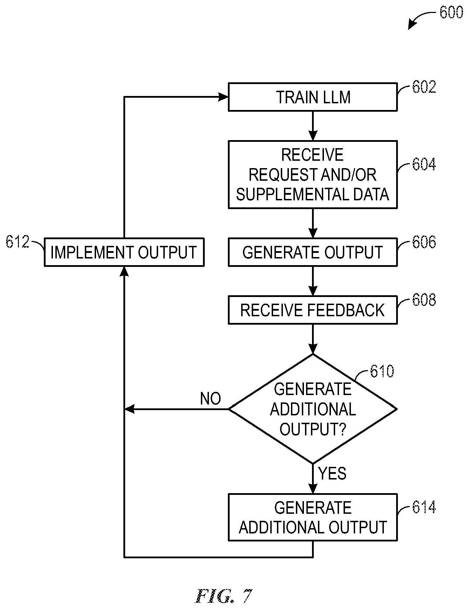

FIG. 7 is a flow chart of a process 600 for operating the LLM-based OT network security assistant. At block 602, one or more LLMs are trained. As previously discussed, the one or more LLMs may be trained using training data that may include user data (e.g., architectures of user industrial automation systems and/or OT networks, security policies used by users, vulnerabilities experienced by users, and so forth), digested OT network security logs, user-specific policies, user-specific guidelines, time series data, log data, process data, industry standards, industry knowledge, product manuals, publications, publicly available security threat intel, and so forth. In some embodiments, the operator of the industrial automation system and/or OT network may utilize externally available data (e.g., publicly available data or data accessible via a data subscription service) to diversify training data for the one or more LLMs. In other embodiments, the one or more LLMs may be trained by a service provider that provides OT network security services to multiple users, collects data from those users in the provision of the OT network security services, and trains and/or retrains the one or more LLMs based on the collected data. The trained LLM may be stored locally or remotely and is made accessible to the OT network security assistant.

At block 604, the process 600 receives a request and/or supplemental data. The request may be a natural language request that includes one or more human-readable alphanumeric character strings asking the OT network security assistant to perform some task (e.g., generate an OT network architecture, one or more configuration files, recommendations for securing the OT network, etc.). The natural language request may or may not be accompanied by one or more pieces of supplemental data or files that may be used by the OT network security assistant to perform the requested task. The supplemental data or files may include, for example, identification of one or more assets within the OT network (e.g., a list of components, discovery data, topology data, etc.), system/network architecture, information about segmentation of the plant network, information about what devices need to be able to communicate with one another, user-specific policies/guidelines, best practices, component lists, maintenance logs, service records, software/firmware versions, time series data, log data, information about the user's industry, the product being produced or process being performed (e.g., brewery, car plant, stamping plant, etc.), geographic region or country, industry specifications/standards/regulations the user wishes to follow, and so forth.

At block 606, the process 600 uses the trained LLM to generate an output based on the input and the supplemental data, if any. For example, the output may include one or more config files, which are text files for configuring devices in the OT network, one or more security policies to be deployed within the OT network, a diagram of a proposed network topology, suggestions about how to segment an OT network, where to place firewalls, where to place edge devices, etc., recommendations for modifications to an OT network to bring the OT network into compliance with one or more policies or guidelines, recommendations for modifications to an OT network to bring the OT network into compliance with one or more industry standards and/or best practices, recommendations for modifications to an OT network to bring the OT network into compliance with the one or more internal policies, guidelines, design objectives, etc., benchmark data for comparing a user to one or more competitors or other members of the same industry, other entities performing the same or similar processes, similar entities in the same geographical region or jurisdiction, and so forth, a comparison of the user to the one or more competitors or other members of the same industry, other entities performing the same or similar processes, similar entities in the same geographical region or jurisdiction, etc., identification of whether the OT network is in compliance with one or more security policies, one or more characteristics of the OT network that are not in compliance with the security policies, recommendations for modifications to an OT network to bring the OT network into compliance with security policies, one or more suggestions for modifying the OT network to improve the security of the OT network given cost constraints, an explanation as to how the OT network is set up and/or why the OT network is set up the way it is, guidance regarding what patches should be installed, as well as where and how to go about installing the patches, identification of security risks and/or vulnerabilities within the OT network, and so forth.

At block 608, the process 600 may receive feedback on the output. The feedback may include filter parameters to filter or modify the output, modifications to the input to result in different outputs, such as providing additional/different constraints, and so forth. In some embodiments, the feedback may be provided via a chat-style interface, whereas in other embodiments, the feedback may be provided as a new input in a more search-style interface.

At decision 610, the process 600 determines whether additional outputs will be generated. For example, if the feedback communicates that no further outputs are needed, such as an indication of satisfaction with the output (e.g., "Thanks!"), the process proceeds to block 612 and implements the output. In some embodiments, the process 600 may implement the output in an entirely automated fashion. This may include, for example, scheduling maintenance/service, updating firmware, ordering replacement parts, implementing one or more security policies, installing a config file, and so forth. In other embodiments, implementing the output may include receiving approval from one or more users with authority to authorize an action before the action is taken. Implementing some outputs, such as rearranging components of the OT network, and so forth, may utilize a human to perform one or more aspects of implementing the output.

However, if the feedback communicates a request for an additional output, such as filtering recommended modifications to the OT network to modifications that cost less than $5,000, the process 600 generates an additional output based on the original request, the supplemental data, if any, and the feedback. In some embodiments, further feedback may be received and additional outputs may be generated in an iterative fashion. The process may proceed to block 612 and implement the output. Following the implementation of the output, the process 600 may return to block 602 and retrain the LLM.

The present disclosure is directed to an LLM-based OT network security assistant to help secure the user's OT network. The LLM may be trained on, for example, user data, industry standards, digested OT network incident logs, user-specific policies/guidelines, time series data, log data, process data, industry knowledge, product manuals, etc. The user may provide a natural language request identifying what the user would like the OT network security assistant to do. For example, the user may request an OT network architecture, one or more configuration files, recommendations for securing the OT network, and so forth. In some cases, the user may provide supplemental data along with the natural language request. In some cases, the user may also identify its industry or product (e.g., brewery, car plant, stamping plant, etc.), geographic region, industry specifications/standards/regulations it wishes to follow, and so forth. The supplemental data may include, for example, identification of one or more assets within the OT network (e.g., a list of components, discovery data, topology data, etc.), specifics about what devices need to be able to communicate with one another, information about segmentation of the plant network, user-specific policies/guidelines, best practices, time series data, log data, etc. The LLM-based OT network security assistant may generate an output based on the natural language request and any supplemental data/files received. The output may include, for example, security policies (e.g., communication policies dictating which devices are allowed to communicate with one another), recommended OT network architecture or characteristics of recommended OT network architecture (e.g., how to segment the OT network, where to put firewalls, etc.), identification or characteristics of the current or proposed OT network that violate policies/guidelines, identification or characteristics of the current or proposed OT network that violate industry standards and/or best practices, draw the users attention to characteristics of the OT network that may not be recommended or violate internal policies/guidelines, benchmark data comparing the user to other members of the same industry, one or more textual configuration files that could be output to a policy manager tool or device to implement, determine if an OT network is complying with security policies, prioritized suggestions for modifications to the OT network based on cost (e.g., the most impactful modifications for a given cost), an explanation of how the OT network is set up and/or why the OT network is set up the way that it is, suggestions on what patches should be installed where and how to go about installing the patches, discovered security risks within the OT network and recommend remedial actions. In some embodiments, the LLM-based OT network security assistant may have an iterative chat-style interface in which the LLM-based OT network security assistant considers inputs and asks follow-up questions seeking additional information. Further, the LLM-based OT network security assistant may apply role-based access control such that the LLM-based OT network security assistant may be aware of with whom it is interacting and what the user has the power to modify about the OT network such that the LLM-based OT network security assistant only makes suggestions to a user based on what the user has the capability to change and know. Accordingly, the LLM-based OT network security assistant helps OT network operators secure their OT networks quickly, easily, for lower cost, and with reduced likelihood of creating unknown vulnerabilities.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

## Claims

1. A method, comprising:
receiving, from a computing device, a request to generate a configuration file for an industrial automation device disposed within an industrial automation system configured to perform an industrial automation process, wherein the industrial automation device is communicatively coupled to an operational technology (OT) network;
receiving, from the computing device, one or more characteristics of the industrial automation device, the industrial automation system, the industrial automation process, the OT network, or any combination thereof;
generating, via processing circuitry, using one or more large language models (LLMs), the configuration file for the industrial automation device based on the one or more characteristics of the industrial automation device, the industrial automation system, the industrial automation process, the OT network, or any combination thereof; and
providing the configuration file for the industrial automation device to the computing device.

2. The method of claim 1, comprising training the one or more LLMs using a training data set, wherein the training data set comprises user data, one or more existing configuration files, one or more industry standards, one or more digested OT network incident logs, one or more security policies, one or more user-specific guidelines, time series data, log data, process data, one or more product manuals, or any combination thereof.

3. The method of claim 1 or 2, comprising:
receiving, from the computing device, feedback on the configuration file;
generating, via the processing circuitry, using the one or more LLMs, an additional configuration file for the industrial automation device based on the feedback and the one or more characteristics of the industrial automation device, the industrial automation system, the industrial automation process, the OT network, or any combination thereof; and
providing the additional configuration file for the industrial automation device to the computing device.

4. The method of claim 3, at least one of:
wherein the feedback comprises a modification to the request;
wherein the feedback comprises a modification to the configuration file; and
comprising training the one or more LLMs based on the feedback.

5. The method of one of claims 1 to 4, wherein the request comprises a natural language input.

6. The method of one of claims 1 to 5, wherein the one or more characteristics of the industrial automation device, the industrial automation system, the industrial automation process, the OT network, or any combination thereof comprise identification of one or more assets on the OT network, a component list, discovery data, network topology data, OT network architecture, one or more security policies, one or more maintenance logs, one or more service logs, industry data, location data, process data, or some combination thereof.

7. A method, comprising:
transmitting, from a computing device, a request to generate a configuration file for an industrial automation device disposed within an industrial automation system configured to perform an industrial automation process, wherein the industrial automation device is communicatively coupled to an operational technology (OT) network;
transmitting, from the computing device, one or more characteristics of the industrial automation device, the industrial automation system, the industrial automation process, the OT network, or any combination thereof;
receiving, at the computing device, the configuration file for the industrial automation device, wherein the configuration file for the industrial automation device was generated using one or more large language models (LLMs) based on the one or more characteristics of the industrial automation device, the industrial automation system, the industrial automation process, the OT network, or any combination thereof; and
installing the configuration file on the industrial automation device.

8. The method of claim 7, wherein the one or more LLMs are hosted on a remote server or a cloud server.

9. The method of claim 8, comprising:
transmitting the request and the one or more characteristics to the remote server or the cloud server; and
receiving, from the cloud server or the remote server, the configuration file.

10. The method of one of claims 7 to 9, wherein the one or more LLMs are hosted on an edge device.

11. The method of one of claims 7 to 9, at least one of:
wherein the one or more LLMs are hosted on a compute surface within the OT network; and
wherein the request comprises a natural language input.

12. The method of one of claims 7 to 11, wherein the one or more characteristics of the industrial automation device, the industrial automation system, the industrial automation process, the OT network, or any combination thereof comprise identification of one or more assets on the OT network, a component list, discovery data, network topology data, OT network architecture, one or more security policies, one or more maintenance logs, one or more service logs, industry data, location data, process data, or some combination thereof.

13. A non-transitory computer readable medium storing instructions that, when executed by processing circuitry, cause the processing circuitry to perform actions comprising:
receiving, via a user interface of a computing device, an input indicative of a request for a configuration file for an industrial automation device disposed within an industrial automation system configured to perform an industrial automation process, wherein the industrial automation device is communicatively coupled to an operational technology (OT) network;
providing, via the processing circuitry, the request for the configuration file for the industrial automation device to one or more large language models (LLMs);
providing, via the processing circuitry, one or more characteristics of the industrial automation device, the industrial automation system, the industrial automation process, the OT network, or any combination thereof to the one or more LLMs;
generating, via the processing circuitry, using the one or more LLMs, the configuration file for the industrial automation device based on the one or more characteristics of the industrial automation device, the industrial automation system, the industrial automation process, the OT network, or any combination thereof; and
providing the configuration file to the industrial automation device for installation.

14. The non-transitory computer readable medium of claim 13, at least one of:
wherein the one or more LLMs are hosted on the computing device;
wherein the one or more LLMs apply a role-based access control based on a user profile associated with the request, wherein the one or more LLMs consider an authority granted to the user profile when generating the configuration file; and
wherein the input indicative of the request comprises a natural language input.

15. The non-transitory computer readable medium of claim 13 or 14, wherein the one or more characteristics of the industrial automation device, the industrial automation system, the industrial automation process, the OT network, or any combination thereof comprise identification of one or more assets on the OT network, a component list, discovery data, network topology data, OT network architecture, one or more security policies, one or more maintenance logs, one or more service logs, industry data, location data, process data, or some combination thereof.
